# EUROPÄISCHE PATENTSCHRIFT

(11) **EP 1 474 484 B1**
(45) Veröffentlichungstag und Bekanntmachung des Hinweises auf die Patenterteilung: **21.09.2011**
(21) Anmeldenummer: 03734602.0
(22) Anmeldetag: 22.01.2003
(51) Int. Cl.: C09B 67/04, C09B 67/06, C09B 67/20, C09C 3/04, C09C 3/10

(54) **PIGMENTGRANULATE**
GRANULAR PIGMENT
GRANULES DE PIGMENT

(30) Priorität: 01.02.2002 DE 10204304
(43) Veröffentlichungstag der Anmeldung: 10.11.2004
(73) Patentinhaber: BASF SE, 67056 Ludwigshafen (DE)
(72) Erfinder: REISACHER, Hansulrich, 67133 Maxdorf (DE); GONZALEZ GOMEZ, Juan Antonio, 67063 Ludwigshafen (DE)
(86) Internationale Anmeldenummer: PCT/EP2003/000591
(87) Internationale Veröffentlichungsnummer: WO 2003/064540

(56) Entgegenhaltungen:
- EP-A1- 0 403 917
- EP-A1- 1 103 173
- EP-A2- 0 084 645
- EP-A2- 0 702 062
- EP-A2- 0 860 476
- DE-A1- 3 132 303
- DE-A1- 4 134 079
- US-A- 4 056 402
- US-A- 4 127 422
- US-A- 4 624 678
- DATABASE WPI Section Ch, Week 199404 Derwent Publications Ltd., London, GB; Class A97, AN 1994-031973 XP002239362 & JP 05 339514 A (TOYO INK MFG CO), 21. Dezember 1993 (1993-12-21)

## Beschreibung

Die vorliegende Erfindung betrifft neue Pigmentgranulate mit einer mittleren Korngröße von 50 bis 5000 µm und einer BET-Oberfläche von ≤ 15 m²/g, bestehend aus
(A) 60 bis 90 Gew.-% mindestens eines Pigments und
(B) 10 bis 40 Gew.-% mindestens eines nichtionischen oberflächenaktiven Additivs aus der Gruppe der Alkylenoxidaddukte an mindestens bifunktionelle Amine oder Alkohole,
erhältlich durch Naßzerkleinerung des Pigments (A) in wässriger, zumindest einen Teil des Additives (B) enthaltender Suspension und anschließende Sprühgranulierung der Suspension, gegebenenfalls nach Zugabe der restlichen Menge Additiv (B).

Außerdem betrifft die Erfindung die Herstellung dieser Pigmentgranulate und ihre Verwendung zum Einfärben von hochmolekularen organischen und anorganischen Materialien.

Zur Pigmentierung von flüssigen Systemen, wie Anstrichmitteln, Lacken, Dispersions-und Druckfarben, werden üblicherweise Pigmentpräparationen eingesetzt, die Wasser, organisches Lösungsmittel oder Mischungen davon enthalten. Neben anionischen, kationischen, nichtionischen oder amphoteren Dispergiermitteln müssen diesen Pigmentpräparationen in der Regel weitere Hilfsmittel, wie Eintrocknungsverhinderer, Mittel zur Erhöhung der Gefrierbeständigkeit, Verdicker und Antihautmittel, zur Stabilisierung zugesetzt werden.

Es bestand Bedarf an neuen Pigmentzubereitungen, die in ihren koloristischen Eigenschaften und der Dispergierbarkeit den flüssigen Präparationen vergleichbar sind, jedoch nicht die genannten Zusätze erfordern und leichter zu handhaben sind. Durch einfaches Trocknen der flüssigen Präparationen können jedoch keine festen Pigmentzubereitungen erhalten werden, die vergleichbare Anwendungseigenschaften aufweisen.

DE 3 132 303 offenbart ein Verfahren zur Herstellung staubarmer anorganischer Pigmentgranulate mit enger Kornverteilung durch Aufbaugranulierung von Pigment/Bindemittel-Mischungen und anschließende Zerkleinerung beim Siebevorgang. Als Bindemittel werden Polyether und Polyethylenglykole verwendet.

US-A-4624 678 beschreibt ein Verfahren zur Herstellung von Farbstoffgranulaten, das sich dadurch auszeichnet, dass die wässrige Farbstofflösung oder-suspension vor der Trocknung mit einem Polyethylenglykol versetzt wird.

EP 1 103 173 offenbart die Verwendung von festen Pigmentpräparationen als Farbmittel zur Einfärbung von Saatgut und Saatgutbeizen. Diese festen Pigmentpräparationen enthalten als Additiv entweder Poletherpolyole oder Umsetzungsprodukte von Alkylenoxiden mit alkylierbaren Verbindungen, wie Fettalkoholen oder Fettaminen.

In den US-A-4 056 402 und 4 127 422 werden trockene, nicht staubende Pigmentzubereitungen für wasserbasierende Beschichtungssysteme beschrieben. Diese Pigmentzubereitungen enthalten jedoch neben nichtionischen Dispergiermitteln als wesentlichen Bestandteil mindestens 10 Gew.-% wasserlösliche Celluloseether bzw. wasserdispergierbare Polyvinylverbindungen und unterscheiden sich daher von den erfindungsgemäßen Pigmentgranulaten.

Aus den EP-A-84 645 und 403 917 sind hochkonzentrierte, feste Pigmentzubereitungen für die Pigmentierung von wässrigen, alkoholischen und wässrig-alkoholischen Lacken und Druckfarben bekannt, die bis zu 30 Gew.-% eines Additivs auf der Basis von Umsetzungsprodukten von mindestens zweiwertigen Aminen mit Propylenoxid und Ethylenoxid enthalten, jedoch in feinteiliger Form vorliegen.

Der Erfindung lag die Aufgabe zugrunde, feste Pigmentzubereitungen bereitzustellen, die sich durch insgesamt vorteilhafte Anwendungseigenschaften, insbesondere hohe Farbstärke und besonders leichte Dispergierbarkeit (Einrührbarkeit,"Stir-in"-Verhalten) in Anwendungsmedien verschiedenster Art, auszeichnen.

Demgemäß wurden Pigmentgranulate mit einer mittleren Korngröße von 50 bis 5000 µm und einer BET-Oberfläche von ≤ 15 m²/g gefunden, bestehend aus
(A) 60 bis 90 Gew.-% mindestens eines Pigments und
(B) 10 bis 40 Gew.-% mindestens eines nichtionischen oberflächenaktiven Additivs aus der Gruppe der Alkylenoxidaddukte an mindestens bifunktionelle Amine oder Alkohole,
erhältlich durch Naßzerkleinerung des Pigments (A) in wässriger, zumindest einen Teil des Additivs (B) enthaltender Suspension und anschließende Sprühgranulierung der Suspension, gegebenenfalls nach Zugabe der restlichen Menge Additiv (B).

Außerdem wurde ein Verfahren zur Herstellung der Pigmentgranulate gefunden, welches dadurch gekennzeichnet ist, dass man das Pigment (A) zunächst in wässriger, zumindest einen Teil des Additivs (B) enthaltender Suspension einer Naßzerkleinerung unterwirft und die Suspension dann, gegebenenfalls nach Zugabe der restlichen Menge Additiv (B), sprühgranuliert.

Weiterhin wurde ein Verfahren zur Einfärbung von hochmolekularen organischen und anorganischen Materialen gefunden, welches dadurch gekennzeichnet ist, dass man die Pigmentgranulate durch Einrühren oder Schütteln in diese Materialien einträgt.

Die erfindungsgemäßen Pigmentgranulate bestehen aus dem Pigment (A) und dem nichtionischen oberflächenaktiven Additiv (B). Sie sind frei von Verdickern, wie Celluloseether, und Filmbildnern, wie Polyvinylacetaten und-alkoholen.

Die mittlere Korngröße der erfindungsgemäßen Pigmentgranulate liegt bei 50 bis 5000 µm, insbesondere bei 100 bis 1000 µm.

Die BET-Oberfläche der erfindungsgemäßen Pigmentgranulate beträgt ≤ 15 m²/g, vorzugsweise ≤ 10 m²/g.

Als Komponente (A) können in den erfindungsgemäßen Pigmentgranulaten organische oder anorganische Pigmente enthalten sein. Selbstverständlich können die Pigmentgranulate auch Mischungen verschiedener organischer oder verschiedener anorganischer Pigmente oder Mischungen von organischen und anorganischen Pigmenten enthalten.

Die Pigmente liegen in feinteiliger Form vor. Die Pigmente haben dementsprechend üblicherweise mittlere Teilchengrößen von 0,1 bis 5 µm.

Bei den organischen Pigmenten handelt es sich üblicherweise um organische Bunt-, Weiß- und Schwarzpigmente (Farbpigmente). Anorganische Pigmente können ebenfalls Farbpigmente sowie Glanzpigmente und die üblicherweise als Füllstoffe eingesetzten anorganischen Pigmente sein.

Im folgenden seien als Beispiele für geeignete organische Farbpigmente genannt:

| | |
|---|---|
| - Monoazopigmente: | C.I. Pigment Brown 25; |
| | C.I. Pigment Orange 5, 13, 36, 38, 64 und 67; |
| | C.I. Pigment Red 1, 2, 3, 4, 5, 8, 9, 12, 17, 22, 23, 31, 48:1, 48:2, 48:3, 48:4, 49, 49:1, 51:1, 52:1, 52:2, 53, 53:1, 53:3, 57:1, 58:2, 58:4, 63, 112, 146, 148, 170, 175, 184, 185, 187, 191:1, 208, 210, 245, 247 und 251; |
| | C.I. Pigment Yellow 1, 3, 62, 65, 73, 74, 97, 120, 151, 154, 168, 181, 183 und 191; |
| | C.I. Pigmente Violet 32; |
| - Disazopigmente: | C.I. Pigment Orange 16, 34, 44 und 72; |
| | C.I. Pigment Yellow 12, 13, 14, 16, 17, 81, 83, 106, 113, 126, 127, 155, 174, 176 und 188; |
| - Disazokondensationspigmente: | C.I. Pigment Yellow 93, 95 und 128; |
| | C.I. Pigment Red 144, 166, 214, 220, 221, 242 und 262; |
| | C.I. Pigment Brown 23 und 41; |
| - Anthanthronpigmente: | C.I. Pigment Red 168; |
| - Anthrachinonpigmente: | C.I. Pigment Yellow 147, 177 und 199; |
| | C.I. Pigment Violet 31; |
| - Anthrapyrimidinpigmente: | C.I. Pigment Yellow 108; |
| - Chinacridonpigmente: | C.I. Pigment Orange 48 und 49; |
| | C.I. Pigment Red 122, 202, 206 und 209; |
| | C.I. Pigment Violet 19; |
| - Chinophthalonpigmente: | C.I. Pigment Yellow 138; |
| - Diketopyrrolopyrrolpigmente: | C.I. Pigment Orange 71, 73 und 81; |
| | C.I. Pigment Red 254, 255, 264, 270 und 272; |
| - Dioxazinpigmente: | C.I. Pigment Violet 23 und 37; |
| | C.I. Pigment Blue 80; |
| - Flavanthronpigmente: | C.I. Pigment Yellow 24; |
| - Indanthronpigmente: | C.I. Pigment Blue 60 und 64; |
| - Isoindolinpigmente: | C.I. Pigmente Orange 61 und 69; |
| | C.I. Pigment Red 260; |
| | C.I. Pigment Yellow 139 und 185; |
| - Isoindolinonpigmente: | C.I. Pigment Yellow 109, 110 und 173; |
| - Isoviolanthronpigmente: | C.I. Pigment Violet 31; |
| - Metallkomplexpigmente: | C.I. Pigment Red 257; |
| | C.I. Pigment Yellow 117, 129, 150, 153 und 177; |
| | C.I. Pigment Green 8; |
| - Perinonpigmente: | C.I. Pigment Orange 43; |
| | C.I. Pigment Red 194; |
| - Perylenpigmente: | C.I. Pigment Black 31 und 32; |
| | C.I. Pigment Red 123, 149, 178, 179, 190 und 224; |
| | C.I. Pigment Violet 29; |
| - Phthalocyaninpigmente: | C.I. Pigment Blue 15, 15:1, 15:2, |
| | 15:3, 15:4, 15:6 und 16; |
| | C.I. Pigment Green 7 und 36; |
| - Pyranthronpigmente: | C.I. Pigment Orange 51; |
| | C.I. Pigment Red 216; |
| - Pyrazolochinazolonpigmente: | C.I. Pigment Orange 67; |
| | C.I. Pigment Red 251; |
| - Thioindigopigmente: | C.I. Pigment Red 88 und 181; |
| | C.I. Pigment Violet 38; |
| - Triarylcarboniumpigmente: | C.I. Pigment Blue 1, 61 und 62; |
| | C.I. Pigment Green 1; |
| | C.I. Pigment Red 81, 81:1 und 169; |
| | C.I. Pigment Violet 1, 2, 3 und 27; |
| - C.I. Pigment Black 1 (Anilinschwarz); | |
| - C.I. Pigment Yellow 101 (Aldazingelb); | |
| - C.I. Pigment Brown 22. | |

Geeignete anorganische Farbpigmente sind z.B.:

| | |
|---|---|
| - Weißpigmente: | Titandioxid (C.I. Pigment White 6), zinkweiß, Farbenzinkoxid; Zinksulfid, Lithopone; |
| - Schwarzpigmente: | Eisenoxidschwarz (C.I. Pigment Black 11), Eisen-Mangan-Schwarz, Spinell-schwarz (C.I. Pigment Black 27); Ruß (C.I. Pigment Black 7); |
| - Buntpigmente: | Chromoxid, Chromoxidhydratgrün; Chromgrün (C.I. Pigment Green 48); Cobaltgrün (C.I. Pigment Green 50); Ultramaringrün; |
| | Kobaltblau (C.I. Pigment Blue 28 und 36; C.I. Pigment Blue 72); Ultramarinblau; Manganblau; |
| | Ultramarinviolett; Kobalt- und Manganviolett; |
| | Eisenoxidrot (C.I. Pigment Red 101); Cadmiumsulfoselenid (C.I. Pigment Red 108); Cersulfid (C.I. Pigment Red 265); |
| | Molybdatrot (C. I. Pigment Red 104) ; UI-tramarinrot ; |
| | Eisenoxidbraun (C. I. Pigment Brown 6 und 7), Mischbraun, Spinell-und Korundphasen (C. I. Pigment Brown, 29,31, 33,34, 35,37, 39 und 40), Chromtitangelb (C. I. Pigment Brown 24), Chromorange ; Cersulfid (C. I. Pigment Orange 75) ; Eisenoxidgelb (C. I. Pigment Yellow 42) ; Nickeltitangelb (C. I. Pigment Yellow 53 ; C. I. Pigment Yellow 157,158, 159,160, 161,162, 163,164 und 189) ; Chromtitangelb ; Spinellphasen (C. I. Pigment Yellow 119) ; Cadmiumsulfid und Cadmiumzinksulfid (C. I. Pigment Yellow 37 und 35) ; Chromgelb (C. I. Pigment Yellow 34) ; Bismutvanadat (C. I. Pigment Yellow 184). |

Als Beispiele für üblicherweise als Füllstoffe eingesetzte anorganische Pigmente seien transparentes Siliciumdioxid, Quarzmehl, Aluminiumoxid, Aluminiumhydroxid, Zinksulfid, natürliche Glimmer, natürliche und gefällte Kreide und Bariumsulfat genannt.

Bei den Glanzpigmenten handelt cs sich um einphasig oder mehrphasig aufgebaute plättehenförmige Pigmente, deren Farbenspiel durch das Zusammenspiel von Interferenz-, Reflexions-und Absorptionsphänomenen geprägt ist. Als Beispiele seien Aluminiumplättchen und ein-oder mehrfach, insbesondere mit Metalloxiden beschichtete Aluminium-, Eisenoxid-und Glimmerplättchen genannt.

Als Komponente (B) enthalten die erfindungsgemässen Pigmentgranulate mindestens ein nichtionisches oberflächenaktives Additiv aus der Gruppe der Alkylenoxidaddukte an mindestens bifunktionelle Amine und Alkohole.

Als mindestens bifunktionelle Amine sind zwei-bis fünfwertige Amine bevorzugt, die insbesondere der Formel H₂N- (R-NR¹) ₙ-H (R : C₂-C₆-Alkylen ; R¹ : Wasserstoff oder C₁-C₆-Alkyl ; n : 1 bis 5) entsprechen. Im einzelnen seien beispielhaft genannt : Ethylendiamin, Diethylentriamin, Triethylentetramin, Tetraethylenpentamin, Propylendiamin-1,3, Dipropylentriamin, 3-Amino-1-ethylenaminopropan, Hexamethylendiamin, Dihexamethylentriamin, 1, 6-Bis- (3-aminopropylamino) hexan und N-Methyldipropylentriamin, wobei Hexamethylendiamin und Diethylentriamin besonders bevorzugt sind und Ethylendiamin ganz besonders bevorzugt ist.

Vorzugsweise werden diese Amine zunächst mit Propylenoxid und anschließend mit Ethylenoxid umgesetzt. Der Gehalt der'Blockcopolymere an Ethylenoxid liegt üblicherweise bei etwa 10 bis 90 Gew.-%.

Die Blockcopolymere auf Basis mehrwertiger Amine weisen in der Regel mittlere Molekulargewichte Mₙ von 1000 bis 40000, vorzugsweise 1500 bis 30000, auf.

Als mindestens bifunktionelle Alkohole sind zwei-bis fünfwertige Alkohole bevorzugt. Beispielsweise seien C₂-C₆-Alkylenglykole und die entsprechenden Di-und Polyalkylenglykole, wie Ethylenglykol, Propylenglykol-1,2 und-1,3, Butylenglykol-1,2 und-1,4, Hexylenglykol-1,6, Dipropylenglykol und Polyethylenglykol, Glycerin und Pentaerythrit genannt, wobei Ethylenglykol und Polyethylenglykol besonders bevorzugt und Propylenglykol und Dipropylenglykol ganz besonders bevorzugt sind.

Besonders bevorzugte Alkylenoxidaddukte an mindestens bifunktionelle Alkohole weisen einen zentralen Polypropylenoxidblock auf, gehen also von einem Propylenglykol oder Polypropylenglykol aus, das zunächst mit weiterem Propylenoxid und dann mit Ethylenoxid umgesetzt wird. Der Gehalt der Blockcopolymere an Ethylenoxid liegt üblicherweise bei 10 bis 90 Gew.-%.

Die Blockcopolymere auf Basis mehrwertiger Alkohole weisen im allgemeinen mittlere Molekulargewichte Mₙ von 1000 bis 20000, vorzugsweise 1000 bis 15000, auf.

Derartige Alkylenoxidblockcopolymere sind bekannt und im Handel z. B. unter den Namen Tetronic® und Pluronic® (BASF) erhältlich.

In Abhängigkeit von dem Anwendungsmedium, in dem die erfindungsgemäßen Pigmentgranulate eingesetzt werden sollen, wählt man Alkylenoxidblockcopolymere (B) mit unterschiedlichen HLB-Werten (Hydrophilic-Lipophilic Balance) aus.

So sind für den Einsatz in wässrigen, wäßrig/alkoholischen und alkoholischen Systemen Alkylenoxidblockcopolymere (B) mit HLB-Werten von etwa ≥ 10 bevorzugt, was einem Ethylenoxidanteil an den Copolymeren von in der Regel ≥ 25 Gew.-% entspricht.

Sollen die erfindungsgemäßen Pigmentgranulate in kohlenwasserstoffbasierenden (z. B. mineralöl-und xylolhaltigen) Systemen oder Systemen auf Nitrocellulosebasis zum Einsatz kommen, so sind Alkylenoxidblockcopolymere (B) mit HLB-Werten von etwa < 10 besonders geeignet, was einem Ethylenoxidanteil an den Copolymeren von im allgemeinen < 25 Gew.-% entspricht.

Die erfindungsgemäßen Pigmentgranulate enthalten 60 bis 90 Gew.-%, bevorzugt 70 bis 85 Gew.-%, der Komponente (A) und 10 bis 40 Gew.-%, vorzugsweise 10 bis 30 Gew.-%, der Komponente (B).

Sie können erhalten werden, indem man das Pigment (A) zunächst in wässriger, zumindest einen Teil des nichtionischen Additivs (B) enthaltender Suspension einer Naßzerkleinerung unterwirft und die Suspension dann, gegebenenfalls nach Zugabe der restlichen Menge Additiv (B), sprühgranuliert.

Das Pigment (A) kann bei dem erfindungsgemäßen Verfahren als trockenes Pulver oder in Form eines Preßkuchens eingesetzt werden.

Bei dem eingesetzten Pigment (A) handelt es sich um ein gefinishtes Produkt, d.h. die Primärkorngröße des Pigments ist bereits auf den für die Anwendung gewünschten Wert eingestellt. Dieser Pigmentfinish muß insbesondere bei organischen Pigmenten durchgeführt werden, da die bei der Pigmentsynthese anfallende Rohware nicht für die Anwendung geeignet ist. Bei anorganischen Pigmenten, z.B. bei Oxid- und Bismutvanadatpigmenten, kann die Einstellung der Primärkorngröße auch bei der Pigmentsynthese erfolgen, so daß die anfallenden Pigmentsuspensionen direkt beim erfindungsgemäßen Verfahren eingesetzt werden können.

Da das gefinishte Pigment (A) bei der Trocknung bzw. auf dem Filteraggregat üblicherweise wieder reagglomeriert, wird es in wäßriger Suspension einer Naßzerkleinerung, z.B. einer Mahlung in einer Rührwerkskugelmühle, unterzogen.

Bei der Naßzerkleinerung sollte zumindest ein Teil des im fertigen Pigmentgranulat enthaltenen Additivs (B) anwesend sein, vorzugsweise setzt man die gesamte Menge Additiv (B) vor der Naßzerkleinerung zu.

Die Sprühgranulierung führt man erfindungsgemäß vorzugsweise in einem Sprühturm mit Einstoffdüse durch. Die Suspension wird hier in Form größerer Tropfen versprüht, wobei das Wasser verdampft. Das Additiv (B) schmilzt bei den Trocknungstemperaturen auf und führt so zur Bildung eines weitgehend kugelförmigen Granulats mit besonders glatter Oberfläche.

Die Gaseintrittstemperatur im Sprühturm liegt im allgemeinen bei 180 bis 300°C, bevorzugt bei 150 bis 300°C. Die Gasaustrittstemperatur beträgt in der Regel 70 bis 150°C, vorzugsweise 70 bis 130°C.

Die Restfeuchte des erhaltenen Pigmentgranulats liegt in der Regel bei < 2 Gew.-%.

Die erfindungsgemäßen Pigmentgranulate zeichnen sich bei der Anwendung durch ihre hervorragenden, den flüssigen Pigmentpräparationen vergleichbaren, koloristischen Eigenschaften, insbesondere ihre Farbstärke und Brillanz, ihren Farbton und-ihr Deckvermögen, und vor allem durch ihr Stir-in-Verhalten aus, d.h. sie können mit sehr geringem Energieeintrag durch einfaches Einrühren oder Schütteln in den Anwendungsmedien verteilt werden.

Im Vergleich zu flüssigen Pigmentpräparationen weisen die erfindungsgemäßen Pigmentgranulate zudem folgende Vorteile auf: Sie haben einen höheren Pigmentgehalt. Während flüssige Präparationen bei der Lagerung zu Viskositätsänderungen neigen und mit Konservierungsmitteln und Mitteln zur Erhöhung der Gefrier- und/ oder Eintrocknungsbeständigkeit versetzt werden müssen, zeigen die erfindungsgemäßen Pigmentgranulate sehr gute Lagerstabilität. Sie sind hinsichtlich Verpackung, Lagerung und Transport wirtschaftlich und ökologisch vorteilhaft. Da sie lösungsmittelfrei sind, weisen sie höhere Flexibilität in der Anwendung auf.

Außerdem zeichnen sich die erfindungsgemäßen Pigmentgranulate durch ausgezeichnete Abriebfestigkeit, geringe Kompaktierungs- bzw. Verklumpungsneigung, gleichmäßige Kornverteilung, gute Schütt-, Riesel- und Dosierfähigkeit sowie Staubfreiheit bei Handling und Applikation aus.

Die erfindungsgemäßen Pigmentgranulate eignen sich hervorragend zur Einfärbung von hochmolekularen organischen und anorganischen Materialien jeglicher Art. Flüssige Anwendungsmedien können dabei auch rein wäßrig sein, Mischungen von Wasser und organischen Lösungsmitteln, z.B. Alkoholen, enthalten oder nur auf organischen Lösungsmitteln, wie Alkoholen, Glykolethern, Ketonen, z.B. Methylethylketon, Amiden, z.B. N-Methylpyrrolidon und Dimethylformamid, Estern, z.B. Essigsäureethyl- und -butylester und Methoxypropylacetat, aromatischen oder aliphatischen Kohlenwasserstoffen, z.B. Xylol, Mineralöl und Benzin, basieren.

Falls der HLB-Wert des in den erfindungsgemäßen Pigmentgranulaten enthaltenen Additivs (B) nicht wie oben beschrieben auf den Charakter des Anwendungsmediums abgestimmt ist, können die Granulate zunächst in ein mit dem jeweiligen Anwendungsmedium verträgliches Lösungsmittel eingerührt werden, was wiederum mit sehr geringem Energieeintrag möglich ist, und dann in dieses Anwendungsmedium eingetragen werden. So können z.B. Aufschlämmungen von Pigmentgranulaten mit hohen HLB-Werten in Glykolen oder sonstigen in der Lackindustrie üblichen Lösungsmitteln, wie Methoxypropylacetat, verwendet werden, um die Pigmentgranulate mit kohlenwasserstoffbasierenden Systemen oder Systemen auf Nitrocellulosebasis verträglich zu machen.

Als Beispiele für Materialien, die mit den erfindungsgemäßen Pigmentgranulaten eingefärbt werden können, seien genannt: Lacke, z.B. Bautenlacke, Industrielacke, Fahrzeuglacke, strahlungshärtbare Lacke; Anstrichmittel, sowohl für den Bautenaußen- als auch -innenbereich, z.B. Holzanstrichmittel, Kalkfarben, Leimfarben, Dispersionsfarben; Druckfarben, z.B. Offsetdruckfarben, Flexodruckfarben, Toluoltiefdruckfarben, Textildruckfarben, strahlungshärtbare Druckfarben; Tinten, auch Ink-Jet-Tinten; Colorfilter; Baustoffe (üblicherweise wird erst nach trockenem Vermischen von Baustoff und Pigmentgranulat Wasser zugesetzt), z.B. Silikatputzsysteme, Zement, Beton, Mörtel, Gips; Asphalt, Dichtungsmassen; cellulosehaltige Materialien, z.B. Papier, Pappe, Karton, Holz und Holzwerkstoffe, die lackiert oder anderweitig beschichtet sein können; Klebstoffe; filmbildende polymere Schutzkolloide, wie sie beispielsweise in der Pharmaindustrie verwendet werden; kosmetische Artikel; Detergentien.

### Beispiele

### Herstellung und Prüfung von erfindungsgemäßen Pigmentgranulaten

Die Herstellung der Pigmentgranulate erfolgte, indem eine Suspension von 20 kg (Beispiel 1: 35 kg) Additiv (B) und 80 kg gefinishtem Pigment (A) in einer Kugelmühle auf einen d₅₀-Wert von 0,8 µm gemahlen und dann in einem Sprühturm mit Einstoffdüse (Gaseintrittstemperatur 170°C, Gasaustrittstemperatur 80°C.) sprühgranuliert wurde.

Die Bestimmung der Farbstärke der Pigmentgranulate erfolgte farbmetrisch in der Weißaufhellung (Angabe der Färbeäquivalente FAE, DIN 55986) in einer wasserbasierenden Dispersionsfarbe. Dazu wurde eine Mischung von jeweils 1,25 g Pigmentgranulat und 50 g eines wasserbasierenden Prüfbinders auf Styrol/Acrylatbasis mit einem Weißpigmentgehalt von 16,4 Gew.-% (TiO₂, Kronos 2043) (Prüfbinder 00-1067, BASF) in einem 150 ml-Kunststoffbecher mit einem Schnellrührer 3 min bei 1500 U/min homogenisiert. Die erhaltene Farbe wurde dann mit einer 100 µm-Spiralrakel auf schwarz/weißen Prüfkarton aufgezogen und 30 min getrocknet.

Den jeweils analogen Dispersionsfarben, die mit handelsüblichen wäßrigen Präparationen der Pigmente hergestellt wurden, wurde der FAE-Wert 100 (Standard) zugeordnet. FAE-Werte < 100 bedeuten eine höhere Farbstärke als beim Standard, FAE-Werte > 100 entsprechend eine kleinere Farbstärke.

In der folgenden Tabelle sind Einzelheiten zu den hergestellten Pigmentgranulaten (Zusammensetzung, mittlere Korngröße d₅₀-Wert, BET-Oberfläche) sowie die jeweils erhaltenen FAE-Werte zusammegestellt. Als nichtionische Additive (B) wurden ingesetzt.
B1: Blockcopolymer auf Basis Ethylendiamin/Propylenoxid/Ethylenoxid mit einem Ethylenoxidgehalt von 40 Gew.-% und einem mittleren Molekulargewicht Mₙ von 12000
B2: Blockcopolymer auf Basis Ethylendiamin/Propylenoxid/Ethylenoxid mit einem Ethylenoxidgehalt von 40 Gew.-% und einem mittleren Molekulargewicht Mₙ von 6700
B3: Propylenoxid/Ethylenoxid/Blockcopolymer mit zentralem Polypropylenoxidblock, einem Ethylenoxidgehalt von 50 Gew.-% und einem mittleren Molekulargewicht Mₙ von 6500

**Tabelle**

| Bsp. | Pigment (A) | Additiv (B) | d₅₀ [µm] | BET [m²/g] | FAE |
|---|---|---|---|---|---|
| 1 | C.I. P.Y. 42 | B1 | 330 | 4 | 110 |
| 2 | C.I. P.Y. 74 | B3 | 270 | 2 | 108 |
| 3 | C.I. P.Y. 138 | B3 | 280 | 1 | 105 |
| 4 | C.I. P.Y. 184 | B1 | 300 | 1 | 105 |
| 5 | C.I. P.R. 101 | B1 | 320 | 4 | 107 |
| 6 | C.I. P.R. 112 | B1 | 330 | 1 | 106 |
| 7 | C.I. P.R. 122 | B1 | 280 | 2 | 106 |
| 8 | C.I. P.V. 19 | B1 | 270 | 1 | 108 |
| 9 | C.I. P.V. 23 | B1 | 290 | 1 | 108 |
| 10 | C.I. P.B. 15:2 | B2 | 300 | 3 | 109 |
| 11 | C.I. P.B. 15:3 | B1 | 300 | 8 | 105 |
| 12 | C.I. P.G. 7 | B1 | 280 | 1 | 107 |
| 13 | C.I. P.Bk. 7 | B1 | 310 | 5 | 108 |

## Patentansprüche

1. Pigmentgranulate mit einer mittleren Korngröße von 50 bis 5000 µm und einer BET-Oberfläche von ≤ 15 m²/g, bestehend aus
(A) 60 bis 90 Gew.-% mindestens eines Pigments und
(B) 10 bis 40 Gew.-% mindestens eines nichtionischen oberflächenaktiven Additivs aus der Gruppe der Alkylenoxidaddukte an mindestens bifunktionelle Amine oder Alkohole,
erhältlich durch Nasszerkleinerung des Pigments (A) in wässriger, zumindest einen Teil des Additivs (B) enthaltender Suspension und anschließende Sprühgranulierung der Suspension, gegebenenfalls nach Zugabe der restlichen Menge Additiv (B).

2. Pigmentgranulate nach Anspruch 1, die als Komponente (B) Blockcopolymere enthalten, die durch sequentielle Polyaddition von Propylenoxid und Ethylenoxid auf die mindestens bifunktionellen Amine oder Alkohole erhalten werden.

3. Verfahren zur Herstellung von Pigmentgranulaten gemäß Anspruch 1 oder 2, **dadurch gekennzeichnet, dass** man das Pigment (A) zunächst in wässriger, zumindest einen Teil des Additivs (B) enthaltender Suspension einer Nasszerkleinerung unterwirft und die Suspension dann, gegebenenfalls nach Zugabe der restlichen Menge Additiv (B), sprühgranuliert.

4. Verfahren nach Anspruch 3, **dadurch gekennzeichnet, dass** man die Sprühgranulierung in einem Sprühturm mit Einstoffdüse durchführt.

5. Verfahren zur Einfärbung von hochmolekularen organischen und anorganischen Materialien, **dadurch gekennzeichnet, dass** man Pigmentgranulate gemäß Anspruch 1 oder 2 durch Einrühren oder Schütteln in diese Materialien einträgt.

6. Verfahren nach Anspruch 5, **dadurch gekennzeichnet, dass** man Lacke, Anstrichmittel, Druckfarben, Tinten, Baustoffe und cellulosehaltige Systeme einfärbt, die als flüssige Phase Wasser, organische Lösungsmittel oder Mischungen von Wasser und organischen Lösungsmitteln enthalten.

## Claims

1. Pigment granules having an average particle size from 50 to 5000 ∝m and a BET surface area ≤ 15 m²/g, consisting of
(A) from 60 to 90% by weight of at least one pigment and
(B) from 10 to 40% by weight of at least one nonionic surface-active additive from the group of alkylene oxide adducts with at least bifunctional amines or alcohols,
obtainable by wet-comminuting said pigment (A) in aqueous suspension in the presence of some or all of said additive (B) and then spray granulating said suspension, if applicable after the rest of said additive (B) had been added.

2. Pigment granules according to claim 1, wherein said component (B) comprises block copolymers obtained by sequential polyaddition of propylene oxide and ethylene oxide to the at least bifunctional amines or alcohols.

3. A process for producing pigment granules according to claim 1 or 2, which comprises wet-comminuting said pigment (A) in aqueous suspension in the presence of some or all of said additive (B) and then spray granulating said suspension, if applicable after the rest of said additive (B) has been added.

4. The process according to claim 3, wherein said spray granulating is effected in a spray tower using a one-material nozzle.

5. A process for pigmenting macromolecular organic and inorganic materials, which comprises incorporating pigment granules according to claim 1 or 2 into these materials by stirring or shaking.

6. The process according to claim 5, for pigmenting coatings, paints, printing inks, liquid inks, building materials and cellulosic systems where the liquid phase comprises water, organic solvents or mixtures of water and organic solvents.

## Revendications

1. Granulés de pigments ayant une taille moyenne de grain de 50 à 5 000 µm et une surface BLET de ≤ 15 m²/g, constitués de
(A) 60 à 90 % en poids d'au moins un pigment et
(B) 10 à 40 % en poids d'au moins un additif tensioactif non ionique choisi dans le groupe des adduits d'oxyde d'alkylène sur des amines au moins bifonctionnelles ou des alcools au moins bifonctionnels,
pouvant être obtenus par fragmentation par voie humide du pigment (A) en suspension aqueuse, contenant au moins une partie de l'additif (B) et ensuite granulation par pulvérisation de la suspension, éventuellement après addition de la quantité restante d' additif (B).

2. Granulés de pigments selon la revendication 1, qui contiennent en tant que composant (B) des copolymères séquencés qui sont obtenus par polyaddition séquentielle d'oxyde de propylène et d'oxyde d'éthylène sur les amines au moins bifonctionnelles ou les alcools au moins bifonctionnels.

3. Procédé pour la préparation de granulés de pigments selon la revendication 1 ou 2, **caractérisé en ce que** d'abord on soumet à une fragmentation par voie humide le pigment (A) en suspension aqueuse, contenant au moins une partie de l'additif (B) et ensuite on soumet à une granulation par pulvérisation la suspension, éventuellement après addition de la quantité restante d'additif (B).

4. Procédé selon la revendication 3, **caractérisé en ce qu'**on effectue la granulation par pulvérisation dans une tour de pulvérisation munie d'une buse monocomposant.

5. Procédé pour la coloration de matières inorganiques ou organiques de masse moléculaire élevée, **caractérisé en ce qu'**on introduit par délayage ou secouement dans ces matières des granulés de pigment selon la revendication 1 ou 2.

6. Procédé selon la revendication 5, **caractérisé en ce qu'**on colore des peintures, des enduits, des encres d'impression, des encres, des matériaux de construction et des systèmes contenant de la cellulose, qui contiennent comme phase liquide de l'eau, des solvants organiques ou des mélanges d'eau et de solvants organiques.
